## Europäisches Patentamt

## European Patent Office

## Office européen des brevets

(19)

(11) Veröffentlichungsnummer: **0 047 512**
**B1**

(12) **EUROPÄISCHE PATENTSCHRIFT**

(45) Veröffentlichungstag der Patentschrift:
18.03.87

(51) Int. Cl.⁴: **G 06 K 9/34**

(21) Anmeldenummer: **81106961.6**

(22) Anmeldetag: **04.09.81**

---

(54) Verfahren und Schaltungsanordnung zur Segmentierung von Zeichen aus einer seriell gelesenen Zeichenfolge.

---

(30) Priorität: **10.09.80 DE 3034099**

(43) Veröffentlichungstag der Anmeldung:
**17.03.82 Patentblatt 82/11**

(45) Bekanntmachung des Hinweises auf die Patenterteilung:
**18.03.87 Patentblatt 87/12**

(84) Benannte Vertragsstaaten:
**AT BE CH DE FR GB IT LI NL SE**

(56) Entgegenhaltungen:
**US-A-3 629 826**
**US-A-3 805 237**

**IBM JOURNAL OF RESEARCH AND DEVELOPMENT, Band 15, Nr. 2, März 1971, Seiten 153-165, New York, USA R.L. HOFFMAN et al.: "Segmentation methods for recognition of machine-printed characters"**
**WISSENSCHAFTLICHE BERICHTE A.E.G.- TELEFUNKEN, Band 47, Nr. 3/4, März 1974, Seiten 90- 99, Berlin, DE. J. SCHÜRMANN: "Bildvorbereitung für die automatische Zeichenerkennung"**
**IEEE TRANSACTIONS OM COMPUTERS, Band C-23, Nr. 11, November 1974, Seiten 1174-1179, New York, USA R.N. ASCHER et al.: "A means for achieving a high degree of compaction on scan- digitized printed text"**

(73) Patentinhaber: **COMPUTER GESELLSCHAFT KONSTANZ MBH, Max- Stromeyer- Strasse 116, D-7750 Konstanz (DE)**

(72) Erfinder: **Bernhardt, Lutz, Dr.rer.nat., Fliesshornstrasse 38, D-7750 Konstanz (DE)**
Erfinder: **Kochert, Wilfried, Gaussweg 14, D-7750 Konstanz (DE)**

(74) Vertreter: **Mehl, Ernst, Dipl.- Ing., Postfach 22 01 76, D-8000 München 22 (DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Segmentierung von Zeichen aus einer seriell gelesenen Zeichenfolge gemäß dem Oberbegriff des Hauptanspruchs.

Bei der automatischen Zeichenerkennung ist es im Rahmen der Bildmustervorbereitung u.a. notwendig, aus der gelesenen Zeichenfolge einzelne, jeweils einem Einzelzeichen innerhalb der Zeichenfolge zugeordnete Segmente zu isolieren. Solange die Zeichenbilder in sich zusammenhängend und völlig von Weißbereichen umgeben sind, bereitet die Zeichensegmentierung kaum Schwierigkeiten siehe Wissenschaftliche Berichte A.E.G.-Telefunken, Vd 47, N° 3/4, 1974, s. 90-99, weil die am linken und rechten Zeichenrand vorhandenen schwarzpunktfreien Spalten ein ausreichendes Indiz für eine Zeichentrennung (Weißspaltensegmentierung) liefern. Dieser "Idealfall" ist jedoch bei allgemeinen Schriften relativ selten, weshalb meist andere, weitaus kompliziertere Segmentierverfahren angewendet werden müssen. So wird beispielsweise bei der Weißwegsegmentierung ein zwar nicht senkrechter, aber doch ausschließlich über Weißpunkte von oben nach unten verlaufender Weißwegkanal gesucht und zur gegenseitigen Trennung benachbarter Zeichen herangezogen.

Ferner ist durch das genannte Dokument, s. 94, 95, auch eine sogenannte Kammsegmentierung bekannt geworden, die bei Schriften mit fester Zeichenbreite verwendet wird und bei der jeweils Spalten mit minimalem Schwarzpunktanteil in einem jeweils der Breite eines Zeichens entsprechenden Abstand zur Zeichentrennung benutzt werden.

Der vorliegenden Erfindung liegt nun die Aufgabe zugrunde, ein Segmentierverfahren der eingangs genannten Art in der Weise zu verbessern, daß unabhängig von der jeweils verwendeten Schriftart sowie unabhängig von der Schriftqualität und des Zeichenhintergrundes eine möglichst sichere Zeichentrennung erzielt werden kann.

Diese Aufgabe wird erfindungsgemäß mit den kennzeichnenden Merkmalen des Hauptanspruchs gelöst.

Vorteilhafte Weiterbildungen der Erfindung sind in den Unteransprüchen angegeben.

Im folgenden wird das erfindungsgemäße Verfahren anhand eines Schaltungsbeispiels näher erläutert. Dabei zeigen:

FIG 1 eine Prinzipschaltung zur Durchführung des erfindungsgemäßen Verfahrens und

FIG 2 ein detaillierteres Schaltbild für eine Schaltung gemäß FIG 1.

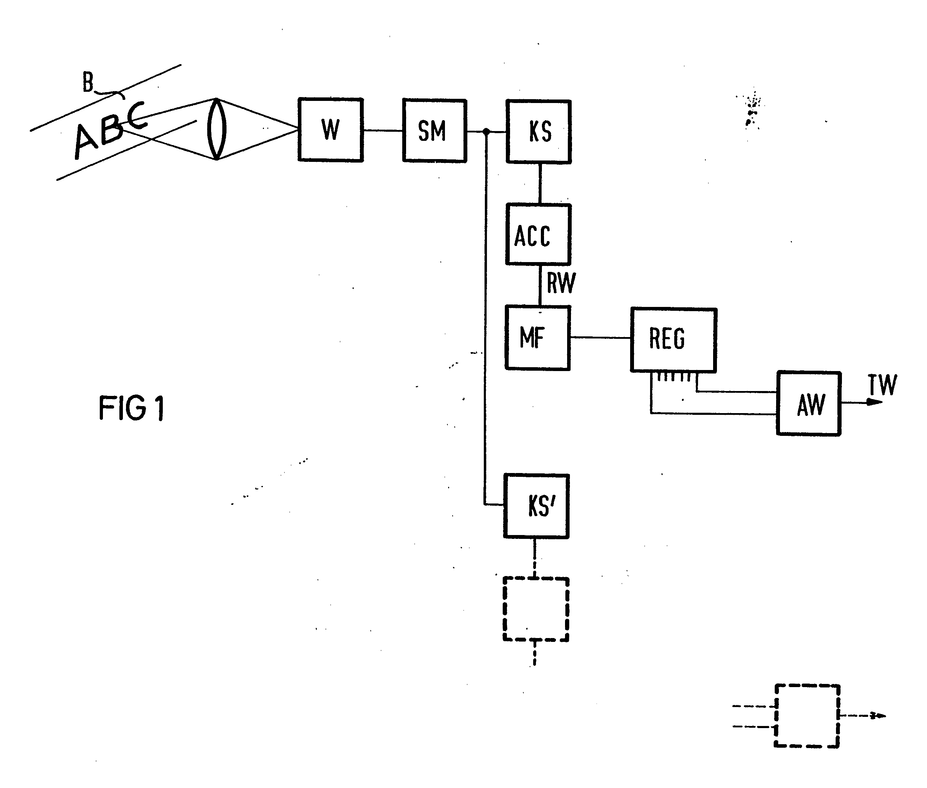

Die FIG 1 zeigt im linken Teil eine z.B. auf einem maschinenlesbaren Beleg B vorhandene Zeichenfolge, die mittels eines optoelektrischen Wandlers W spaltenweise gelesen wird. Die gelesenen Signale werden ebenfalls spaltenweise einer Speichermatrix SM zugeführt, in der jeweils ein fester fensterartiger Ausschnitt der Zeichenfolge in Form eines Schwarz/Weiß-Bildmusters gespeichert ist. Dieser Speichermatrix SM ist ein an sich bekannter - z.B. quadratischer Klassifikator in Form eines Koeffizientenspeichers KS zugeordnet, aus dem, gesteuert durch das jeweilige Bildmuster bildmusterspezifisch einzelne Koeffizienten ausgelesen und pro Bildmuster in einer nachfolgenden Akkumulatorstufe ACC zu einem Randwert RW aufsummiert werden. Das Auslesen der Koeffizienten kann beispielsweise durch die Position der Schwarzpunkte des Bildmusters gesteuert werden. Eine andere Möglichkeit besteht darin, daß zunächst aus dem Bildmuster verschiedene Merkmale gebildet werden, zum Beispiel die Anzahl der Schwarzpunkte pro Spalte, die Anzahl der Schwarz/Weiß-Übergänge pro Spalte, die Anzahl der Schwarz/Weiß-Übergänge zur jeweiligen Folgespalte und die Anzahl der Weiß/Schwarz-Übergänge zur jeweiligen Folgespalte. In diesem Fall wird das Auslesen der Koeffizienten aus dem Koeffizientenspeicher in Abhängigkeit von der Häufigkeit dieser Merkmale gesteuert. Die Koeffizienten des Klassifikators sind dabei so gewählt, daß sich im Bereich von Trennstellen ein möglichst hoher Randwert, z.B. nahe dem Wert 1, ergibt, während sich im Zeichenbereich selbst nur Randwert nahe dem Wert -1 ergeben.

Aus der fortlaufend, gegebenenfalls geglätteten Randwertreihe werden nun mittels eines Maximumfilters MF die lokalen Maximal-Randwerte herausgegriffen und hinsichtlich Ort (Spaltennummer) und Amplitude festgehalten. Die Maximal-Randwerte werden schließlich zur weiteren Auswertung in ein Schieberegister REG seriell eingeschrieben und aus diesem jeweils in Dreiergruppen parallel ausgelesen. Dabei wird aus der Amplitude jedes Maximal-Randwertes, sowie der Amplitude und dem Abstand der beidseitig benachbarten Maximal-Randwerte je ein Trennstellenwert TW nach der Beziehung

$$TW = n_1 \cdot h_v + n_2 \cdot a_v + n_3 \cdot h_m + n_4 \cdot a_n + n_5 \cdot h_n$$

gebildet, wobei $h_v$, $h_m$ bzw. $h_n$ = Höhe des vorhergehenden, mittleren (d.h. aktuellen) bzw. nachfolgenden Maximal-Randwertes, $a_v$ bzw. $a_n$ = Abstand zwischen dem mittleren Maximal-Wert und dessen Vorgänger bzw. Nachfolger, $n_1$ und $n_5$ negative und $n_2$, $n_3$, $n_4$ positive Zahlen bedeuten. Als Beispiel sind für $n_1$ und $n_3$ jeweils Werte von -0,5, für $n_2$ und $n_4$ jeweils Werte von +0,02 und für $n_3$ der Wert von +1,2 einsetzbar. Im Falle einer Trennstelle ergibt sich dann ein Trennstellenwert TW in der Nähe von 1, während sich im Zeichenbereich (keine Trennstelle) Werte in der Nähe von 0 ergeben. Werte im Intervall von $0,5 \pm \varepsilon$ (Mittelwert $\pm$ Schwellwert) werden als unsichere Entscheidung gewertet. Im vorliegenden Beispiel könnte der Schwellwerte $\varepsilon$ = 0,2 gewählt werden. Im Fall einer unsicheren Entscheidung wird dann ein zweiter Klassifikator KS' herangezogen, der analog zur ersten Randwertreihe eine zweite Randwertreihe ermittelt. Dieser zweiten, auf Extremfälle zugeschnittene Klassifikator enthält deshalb vorzugsweise Koeffizienten für schwierig zu segmentierende Bildausschnitte.

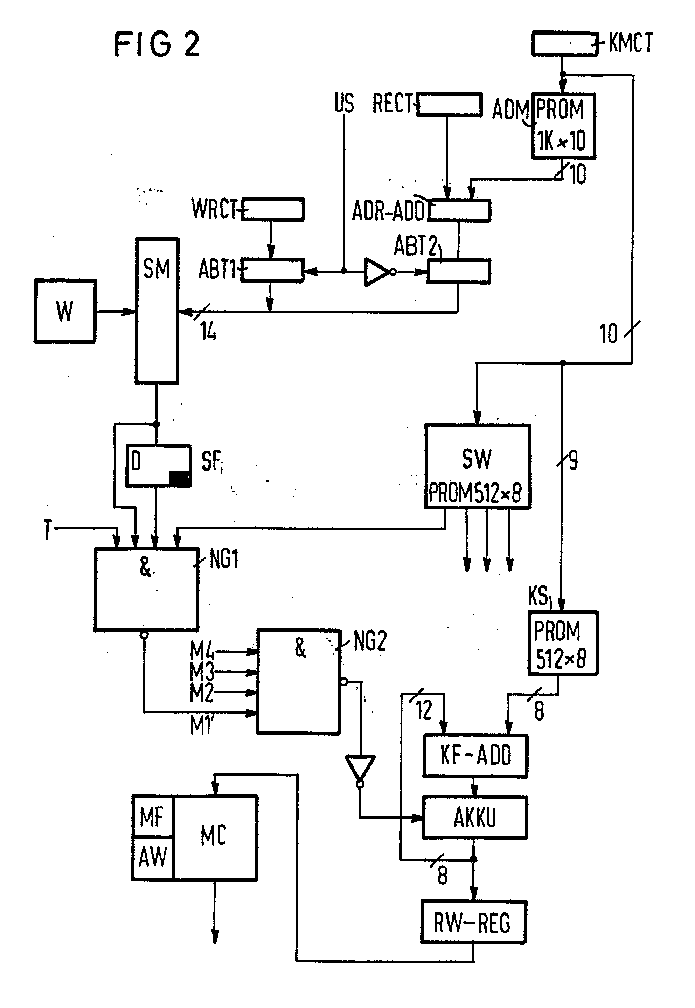

Einzelheiten des in FIG 1 dargestellten Prinzipschaltbildes ergeben sich aus der Schaltung gemäß FIG 2. Die mittels eines optoelektrischen Wandlers W spaltenweise gelesene Zeichenfolge wird quantisiert in eine Speichermatrix SM eingeschrieben, in der jeweils ein fester fensterartiger Ausschnitt der Zeichefolge in Form eines Schwarz/Weiß-Bildmusters gespeichert ist. Der Einspeicherzähler WRCT liefert dazu die jeweils aktuellen Adressen. Nach dem Einlesen des jeweils aktuellen Bildmusters erfolgt eine Umschaltung vom Einspeicherzähler WRCT zu einem Auslesezähler RECT, wobei die den einzelnen Zählern jeweils nachgeschalteten Adreß-BUS-Treiber ABT1 und ABT2 durch ein Umschaltsignal US entsprechend angesteuert werden. Die Adresse für das Auslesen aus der Speichermatrfx SM wird in einem Adreß-Addierer ADR-ADD erzeugt, der aus einer festen, vom Auslesezahler RECT gelieferten Adresse und einer aus einem Merkmal-Adreßspeicher ADM ausgelesenen relativen Adresse die jeweils entsprechende Leseadresse bildet. Die Auslesung der relativen Adresse wird durch einen Koeffizientenspeicherzähler KMCT gesteuert. Der Ausgang der Speichermatrix SM ist einerseits über ein Synchronisier-Flip-Flop SF mit einem ersten Eingang und andererseits direkt mit einem zweiten Eingang eines NAND-Gliedes NG1 verbunden, an dessen Ausgang in Abhängigkeit von einem jeweils aktuellen Koeffizienten je ein für die Randwert-Bildung wesentliches Merkmal, beispielsweise die Anzahl der Schwarz/Weiß-Übergänge pro Bildmusterspalte, erzeugt wird. Die dazu notwendige Ansteuerung erfolgt durch den Koeffizientenspeicherzähler KMCT, sowie ein diesem nachgeschaltetes Schaltwerk SW, das jeweils dann einen Impuls zur Merkmalsbildung abgibt, wenn der Koeffizientennummer das entsprechende Merkmal zugeordnet ist. Diese Zuordnung ist im Schaltwerk SW gespeichert.

Das Schaltwerk SW weist für jedes der zu bildenden Merkmale M1...4 einen eigenen Ausgang auf. In der Zeichnung sind aus Gründen der Übersichtlichkeit nur die Symbole für die Bildung eines Merkmals M1 dargestellt. Alle Merkmale werden schließlich über ein weiteres NAND-Glied NG2 miteinander verknüpft, dessen Ausgangssignal wiederum eine Akkumulatorstufe AKKU ansteuert. In einem der Akkumulatorstufe AKKU vorgeschalteten Koeffizientenaddierer KF-ADD wird ein aus einem Koeffizientenspeicher KS ausgelesener Klassifikatorkoeffizient so oft auf die in der Akkumulatorstufe AKKU stehende Zwischensumme aufaddiert, wie dies durch den zahlenmäßigen Betrag des gegebenen Merkmals bestimmt ist. Das Auslesen des Koeffizientenspeichers KS wird ebenfalls durch den Koeffizientenspeicherzähler KMCT gesteuert. Die auf diese Weise gebildete Endsumme wird dann als jeweiliger Randwert im Randwert-Register RW-REG abgelegt. Aus den dort zwischengespeicherten Randwerten werden schließlich in einem Mikrocomputer MC zum Zwecke der Zeichensegmentierung entsprechende Trennstellenwerte gebildet. Dies geschieht beispielsweise gemäß der im Zusammenhang mit der Schaltung nach FIG 1 geschilderten Verfahrensweise oder dadurch, daß jeder Randwert mit einem weiteren, jeweils durch die gleiche Spaltenzahl davon getrennten Randwert mittels einer Multiplizierstufe verknüpft und die einzelnen Randwertprodukte aufsummiert werden, wobei für wenigstens zwei verschiedene Spaltenabstände getrennte Randwertprodukt-Summen ermittelt und in der Weise bewertet werden, daß der jeweilige Maximalwert einer dieser Randwert-Produkt-Summen als Trennstellenwert signalisiert wird.

**Patentansprüche**

1. Verfahren zur Segmentierung von Zeichen aus einer seriell gelesenen Zeichenfolge, unter Verwendung wenigstens einer Speichermatrix, in der fortlaufend gleichgroße, jeweils mehrere Spalten umfassende fensterartige Ausschnitte der Zeichenfolge in Form je einer Bildmustermatrix einspeicherbar sind, dadurch gekennzeichnet, daß aus einem Koeffizientenspeicher für jedes der jeweils um eine Spaltenbreite gegeneinander versetzten Bildmuster mehrere für das jeweilige Bildmuster spezifische Koeffizienten ausgelesen und zu einem, der jeweils mittleren Spalte der Bildmustermatrix zugeordneten Randwert aufsummiert werden und daß ein in der Folge der fortlaufend gebildeten und gegebenenfalls geglätteten Randwertreihe auftretender Maximalwert eine Trennstelle für die jeweils zugeordnete Spalte signalisiert.

2. Verfahren nach Anspruch 1, dadurch gekennzeichnet, daß das Auslesen der Koeffizienten aus dem Koeffizientenspeicher durch die Position der Schwarzpunkte des Bildmusters gesteuert wird

3. Verfahren nach Anspruch 1, dadurch gekennzeichnet, daß für jedes Bildmuster aus der Anzahl der Schwarzpunkte pro Spalte, der Anzahl der Schwarz/Weiß-Übergänge pro Spalte, der Anzahl der Schwarz/Weiß-Übergänge zur jeweiligen Folgespalte und der Anzahl der Weiß/Schwarz-Übergänge zur jeweiligen Folgespalte entsprechende Merkmale gebildet werden und daß das Auslesen der Koeffizienten aus dem Koeffzientenspeicher in Abhängigkeit von der Häufigkeit dieser Merkmale gesteuert wird.

4. Verfahren nach einem der vorhergehenden Ansprüche, dadurch gekennzeichnet, daß der Abstand des Trennstellen-Wertes von einem Mittelwert mit einem Schwellwert verglichen und derart bewertet wird, daß bei Überschreitung dieses Schwellwertes in Richtung zunehmender bzw. abnehmender Werte eine Trennstelle bzw. keine Trennstelle signalisiert wird.

3. Verfahren nach einem der vorhergehenden Ansprüche, dadurch gekennzeichnet, daß aus der Randwertreihe jeweils Maximal-Randwerte herausgegriffen und jeder Maximal-Randwert hinsichtlich seines Ortes und seiner Amplitude sowie in Beziehung zum jeweils vorherigen und/oder nachfolgenden Maximal-Randwert in der Weise bewertet wird, daß sich bei vergleichsweise großem Abstand und vergleichsweise geringer Amplitude bei wenigstens einem der beiden benachbarten Maximal-Randwerte für den jeweils mittleren Maximal-Randwert ein eine Trennstelle signalisierender Trennstellen-Wert ergibt.

6. Verfahren nach einem der vorhergehenden Ansprüche, dadurch gekennzeichnet, daß der Trennstellenwert als gewichteter Summenwert nach der Beziehung

$$TW = n_1 \cdot h_v + n_2 \cdot a_v + n_3 \cdot h_m + n_4 \cdot a_n + n_5 \cdot h_n$$

ermittelt wird, wobei $h_v$, $h_m$ bzw. $h_n$ = Höhe des vorhergehenden, mittleren (d.h. aktuellen) bzw. nachfolgenden Maximal-Randwertes, $a_v$ bzw. $a_n$ = Abstand zwischen dem mittleren Maximal-Wert und dessen Vorgänger bzw. Nachfolger, $n_1$ und $n_5$ negative und $n_2$, $n_3$, $n_4$ positive Zahlen bedeuten.

7. Verfahren nach Anspruch 1, dadurch gekennzeichnet, daß ausgehend von der fortlaufend gebildeten Randwertreihe jeder Randwert mit einem weiteren, jeweils durch eine gleiche Spaltenzahl davon getrennten Randwert mittels einer Multiplizierstufe verknüpft und die einzelnen Randwertprodukte aufsummiert werden, und daß die für jeweils zwei verschiedene Spaltenabstände getrennt ermittelten Randwertprodukt-Summen in der Weise bewertet werden, daß der jeweilige Maximalwert dieser Randwertprodukt-Summen einen Trennstellen-Wert signalisiert.

8. Verfahren nach einem der Ansprüche 4 bis 7, dadurch gekennzeichnet, daß bei einem innerhalb des Schwellwert-Bereichs liegenden Trennstellenwert analog zur ersten Randwertreihe eine zweite Randwertreihe ermittelt werden, deren einzelne Randwerte aus Koeffizienten gebildet werden, denen ausschließlich Merkmale schwierig zu segmentierender Bildausschnitte zugeordnet sind.

9. Schaltungsanordnung zur Durchführung des Verfahrens nach einem der Ansprüche 1 bis 8, dadurch gekennzeichnet, daß eine als optoelektrischer Wandler (W) ausgebildete Abtasteinheit mit einer Speichermatrix (SM) verbunden ist, in der die zugeführten Abtastsignale in Form einer spaltenweise verschiebbaren Bildmustermatrix zwischengespeichert sind, daß der Speichermatrix (SM) ein Klassifikator in Form eines Koeffizientenspeichers (KS) zugeordnet ist, aus dem, gesteuert durch das jeweils aktuelle Bildmuster, Koeffizienten auslesbar sind, daß der Koeffizientenspeicher (KS) mit einer Akkumulatorstufe (ACC) verbunden ist, in der die pro Bildmuster ausgelesenen Koeffizienten zu einem Randwert aufsummiert werden und daß der Ausgang der Akkumulatorstufe (ACC) mit einer Auswerteschaltung (AW) zur Ermittlung eines Trennstellen-Wertes verknüpft ist.

10. Schaltungsanordnung nach Anspruch 9, dadurch gekennzeichnet, daß der Speichermatrix (SM) je ein über ein Umschaltsignal (US) wechselweise anschaltbarer Einspeicherzähler (WRCT) bzw. Auslesezähler (RECT) zugeordnet ist, daß der Ausgang der Speichermatrix (SM) einerseits über ein Synchronisier-Flip-Flop (SF) mit einem ersten Eingang je eines NAND-Gliedes (NG1) und andererseits direkt mit einem zweiten Eingang dieses NAND-Gliedes verbunden ist, daß dem Auslesezähler (RECT) ein Adreß-Addierer (ADR-ADD) nachgeschaltet ist, der jeweils eine feste Adresse aus dem Auslesezähler (RECT) mit einer relativen Adresse, die aus einem durch einen Koeffizientenspeicherzähler (KMCT) gesteuerten Merkmal-Adreßspeicher (ADM) ausgelesen wird, zu einer Leseadresse verknüpft, daß aus den Ausgangssignalen der Speichermatrix (SM) in Abhängigkeit vom jeweils aktuellen Koeffizienten, gesteuert durch den Koeffizientenspeicherzähler (KMCT) und durch ein diesem nachgeschaltetes Schaltwerk (SW), je ein am Ausgang der nachgeschalteten NAND-Glieder (NG1) auftretendes Merkmal (M1) erzeugt wird und daß die über ein weiteres NAND-Glied (NG2) miteinander verknüpften Merkmale (M1..4) eine Akkumulatorstufe (AKKU) ansteuern, deren Ausgangssignal einerseits als Zwischenstufe einem vorgeschalteten Koeffizienten-Addierer (KF-ADD) zur Addition mit einem aus einem ebenfalls vom Koeffizientenspeicherzähler (KMCT) gesteuerten Koeffizientenspeicher (KS) ausgelesenen Klassifikatorkoeffizienten und andererseits als Endsumme einem Randwert-Register (RW-REG) zugeführt wird.

**Claims**

1. A method or segmenting characters in a sequentially-read character sequence, using at least one storage matrix in which equal-sized window-like segments of the character sequence, each of which comprises a plurality of columns, can be continuously stored, each in the form of an image pattern matrix, characterised in that for each of the image patterns, which are each mutually offset by the breadth of one column, a plurality of coefficients, specific to the image pattern in question, are read out from a coefficient store and are added to form a boundary value, in each case assigned to the middle column of the image pattern matrix, and that a maximum value which occurs in the sequence or the continuously-formed, and where necessary smoothed, series of boundary values signals a separation point for the assigned column.

2. A method as claimed in claim 1, characterised in that the read-out or the coefficients from the coefficient store is controlled by the position or the black points or the image pattern.

3. A method as claimed in claim 1, characterised in that for each image pattern corresponding features are formed from the number or black points per column, the number or black/white transitions per column, the number of black/white transitions to the following column and the number or white/black transitions to the following column, and that the read-out of the coefficients from the coefficient store is controlled in dependence upon the frequency of these characteristics.

4. A method as claimed in one of the preceding claims, characterised in that the interval of the separation point value from a mean value is compared with a threshold value and evaluated in such manner that when this threshold value is exceeded in the direction of increasing values, a separation point is signalled and when this threshold value is exceeded in the direction of decreasing values no separation point is signalled.

5. A method as claimed in one of the preceding claims, characterised in that maximum boundary values are taken from the series or boundary values and each maximum boundary value is evaluated with respect to its location and its amplitude and in relation to the preceding and/or following maximum boundary value in that when at least one of the two adjacent maximum boundary values has a comparatively large interval and a comparatively low amplitude with regard to the middle maximum boundary value, a separation point value, signalling a separation point, is produced.

6. A method as claimed in one of the preceding claims, characterised in that the separation point value is determined as a weighted sum value in accordance with the equation

$$TW = n_1 . h_v + n_2 . a_v + n_3 . h_m + n_4 . a_n + n_5 . h_n$$

where $h_v$, $h_m$ and $h_n$ represent the level of the preceding, middle (i.e. current) and following maximum boundary values respectively, $a_v$ and $a_n$ represent the interval between the middle maximum value and the preceding and following maximum values respectively, and $n_1$ and $n_5$ represent negative numbers and $n_2$, $n_3$, $n_4$ represent positive numbers.

7. A method as claimed in claim 1, characterised in that, commencing from the continuously-rormed series of boundary values, each boundary value is logic-linked by a multiplier stage to a further boundary value from which it is separated by an equal number of columns, and the individual boundary value products are added, and that the boundary value product sums, separately calculated for two different column intervals, are evaluated in that the maximum value or these boundary value product sums in each case signals a separation point value.

8. A method as claimed in one of the claims 4 to 7, characterised in that when a separation point value lies within the threshold value range, in accordance with the first series or boundary values a second series of boundary values is calculated, the individual boundary values of which are formed from coefficients which are assigned exclusively characteristics of image segments which are difficult to segment.

9. A circuit arrangement for the implementation of the method claimed in one of the claims 1 to 8, characterised in that a scanning unit, formed as an opto-electronic transducer (W), is connected to a storage matrix (SM) in which the supplied scan signals are intermediately stored in the form of an image pattern matrix which can be displaced column by column, that the storage matrix (SM) is assigned a classifier in the form of a coefficient store (KS) from which, under the control of the current image pattern, coefficients can be read out, that the coefficient store (KS) is connected to an accumulator stage (ACC) in which the coefficients, read out in respect of each image pattern, are added to form a boundary value, and that the output of the accumulator stage (ACC) is logic-linked to an analysis circuit (AW) for the determination of a separation point value.

10. A circuit arrangement as claimed in claim 9, characterised in that the storage matrix (SM) is assigned an input counter (WRCT) and a read-out counter (RECT), which can each be alternately connected via a switch-over signal (US), that the output of the storage matrix (SM) is connected on the one hand via a synchronising flip-flop (SF) to a first input or a NAND-gate (NG1) and on the other hand is directly connected to a second input of this NAND-gate, that the read-out counter (RECT) is connected at its output to an address-adder (ADR-ADD) which in each case logic-links a fixed address from the read-out counter (RECT) to a relative address which is read out from a characteristic-address store (ADM) controlled by a coefficient store counter (KMCT), to form a read address, that from the output signals of the storage matrix (SM) - in dependence upon the current coefficient, controlled by the coefficient store counter (KMCT) and a subsequently-connected switching unit (SW) - a characteristic (M1) is produced which occurs at the output of the subsequently-connected NAND-gates (NG1), and that the characteristics (M1..4) which are logic-linked to one another via a further NAND-gate (NG2) drive an accumulator stage (AKKU), the output signal or which is fed on the one hand as intermediate stage to a preceding coefficient adder (KF-ADD) for addition to a classifier coefficient read out from a coefficient store (KS), likewise controlled by the coefficient store counter (KMCT), and on the other hand is fed as end sum to a boundary value register (RW-REG).

## Revendications

1. Procédé pour réaliser la segmentation de caractères à partir d'une suite de caractères lue en série, moyennant l'utilisation d'au moins une matrice de mémoire, dans laquelle des parties en forme de fenêtres, possédant les mêmes dimensions et englobant respectivement plusieurs colonnes, de la suite de caractères peuvent être mémorisées en permanence sous la forme d'une matrice respective de profils d'image, caractérisé par le fait que plusieurs coefficients spécifiques pour le profil d'image respectif sont lus à partir d'une mémoire de coefficients pour chacun des profils d'image décalés respectivement les uns par rapport aux autres d'une largeur de colonne, et sont additionnés pour former une valeur marginale associée à la colonne centrale respective de la matrice de profils d'image, et qu'une valeur maximale, qui apparaît dans la séquence de la série de valeurs marginales, formée en permanence et éventuellement filtrée, signale une zone de séparation pour la colonne respectivement associée.

2. Procédé suivant la revendication 1, caractérisé par le fait que la lecture des coefficients à partir de la mémoire de coefficients est commandée par la position des points noirs du modèle d'image.

3. Procédé suivant la revendication 1, caractérisé par le fait que pour chaque modèle d'image on forme des caractéristiques correspondantes à partir du nombre des points noirs dans chaque colonne, du nombre des transitions noir/blanc dans chaque colonne, du nombre des transitions noir/blanc avec la colonne suivante respective et du nombre des transistions blanc/noir avec la colonne suivante respective, et que la lecture des coefficients à partir de la mémoire de coefficients est commandée en fonction de la fréquence de ces caractéristiques.

4. Procédé suivant l'une des revendications précédentes, caractérisé par le fait que l'écart entre la valeur de la zone de séparation et une valeur centrale est comparée à une valeur de seuil et est pondérée de telle sorte que, lors du dépassement de cette valeur de seuil en direction de valeurs allant en croissant ou en diminuant, une zone de séparation est signalée ou aucune zone de séparation n'est signalée.

5. Procédé suivant l'une des revendications précédentes, caractérisé par le fait que des valeurs marginales maximales sont respectivement extraites de la série des valeurs marginales et que chaque valeur marginale maximale est pondérée du point de vue de son emplacement et de son amplitude ainsi qu'en rapport avec la valeur marginale maximale respectivement précédente et/ou suivante de telle sorte que, dans le cas d'un écart comparativement important et d'une amplitude comparativement faible dans le cas d'au moins l'une des deux valeurs marginales maximales voisines, on obtient, pour la valeur marginale maximale centrale respective, une valeur de zone de séparation signalant une zone de séparation.

6. Procédé suivant l'une des revendications précédentes, caractérisé par le fait que la valeur de zone de séparation est déterminée en tant que valeur somme pondérée conformément à la relation

$$TW = n_1 . h_v + n_2 . a_v + n_3 . h_m + n_4 . a_n + n_5 . h_n$$

dans laquelle $h_v$, $h_m$ ou $h_n$ désigne l'amplitude de la valeur marginale maximale précédente, centrale (c'est-à-dire actuelle) ou suivante, $a_v$ ou $a_n$ désigne la distance entre la valeur maximale centrale et la valeur qui la précède ou la valeur qui la suit, $n_1$ et $n_5$ désignent des nombres négatifs et $n_2$, $n_3$, $n_4$ désignent des nombres positifs.

7. Procédé suivant la revendication 1, caractérisé par le fait qu'à partir de la série de valeurs marginales formée de façon continue, chaque valeur marginale est combinée, au moyen d'un étage multiplicateur, à une autre valeur marginale qui en est séparée respectivement par un même nombre de colonnes, et les différents produits de valeurs marginales sont additionnés, et que les sommes de produits de valeurs marginales, qui sont déterminées séparément pour respectivement deux écarts différents entre colonnes, sont pondérées de telle sorte que la valeur maximale respective de ces sommes de produits de valeurs marginales signale une valeur de zone de séparation.

8. Procédé suivant l'une des revendications 4 à 7, caractérisé par le fait que dans le cas d'une valeur de zone de séparation située à l'intérieur de la plage de valeurs de seuil, on détermine, de la même manière que pour la première série de valeurs marginales, une seconde série de valeurs marginales, dont les différentes valeurs marginales sont formées à partir de coefficients auxquels sont associées exclusivement des caractéristiques de parties d'image pouvant être difficilement segmentées.

9. Montage pour la mise en oeuvre du procédé suivant les revendications 1 à 8, caractérisé par le fait qu'une unité d'exploration réalisée sous la forme d'un transducteur optoélectrique (W) est reliée à une matrice de mémoire (SM), dans laquelle les signaux d'exploration envoyés sont mémorisés temporairement sous la forme d'une matrice de modèles d'image déplaçables suivant des colonnes, qu'à la matrice de mémoire (SM) est associé un classificateur réalisé sous la forme d'une mémoire de coefficients (KS), à partir de laquelle les coefficients peuvent être lus, conformément à une commande fournie par le modèle d'image actuel respectif, qu'à la mémoire de coefficients (KS) est reliée un étage accumulateur (ACC), dans lequel les coefficients lus pour chaque modèle d'image sont additionnés pour former une valeur marginale et que la sortie de l'étage accumulateur (ACC) est associée à un circuit d'évaluation (W) servant à déterminer une valeur de zone de séparation.

10. Montage suivant la revendication 9, caractérisé par le fait que la matrice de mémoire (SM) est associée respectivement à un compteur de mémorisation (WRCT) ou un compteur de lecture (RECT) pouvant être raccordé en alternance par l'intermédiaire d'un signal de commutation (MS), que la sortie de la matrice de mémoire (SM) est reliée d'une part par l'intermédiaire d'une bascule bistable de synchronisation (SF) à une première entrée d'un circuit NON-ET respectif (NG1) et d'autre part directement à la seconde entrée de ce circuit NON-ET, et qu'en aval du compteur de lecture (RECT) se trouve branché un additionneur d'adresses (ADR-ADD), qui combine respectivement une adresse fixe tirée du compteur de lecture (RECT) à une adresse relative qui est lue à partir d'une mémoire (AGM) d'adresses de caractéristiques, commandée par un compteur (KMCT) de la mémoire de coefficients, pour former une adresse de lecture, que conformément à une commande délivrée par le compteur (KMCT) de la mémoire de coefficients et par une unité de commutation (SW) branchée en aval de ce compteur, respectivement une caractéristique (M1) apparaissant sur la sortie du circuit NON-ET (NG1) branché en aval est produite à partir des signaux de sortie de la matrice de mémoire (SM), en fonction du coefficient respectif actuel, et que les caractéristique (M1... 4) combinées entre elles par l'intermédiaire d'un autre circuit NON-ET (NG2), commandent un étage accumulateur (AKKU), dont le signal de sortie est envoyé d'une part en tant qu'échelon intermédiaire d'un additionneur de coefficients (KF-ADD) branché en amont, pour être additionné avec un coefficient du classificateur, lu à partir d'une mémoire de coefficient (KS) commandée également par le compteur (KMCT) de la mémoire de coefficients, et d'autre part en tant que somme finale, un registre (RW-REG) des valeurs marginales.

FIG 1

0 047 512

B

ABC

W    SM    KS

ACC

RW

MF    REG    AW → TW

KS'

# FIG 2